# EUROPÄISCHE PATENTSCHRIFT

(11) **EP 1 755 927 B1**
(45) Veröffentlichungstag und Bekanntmachung des Hinweises auf die Patenterteilung: **12.12.2007**
(21) Anmeldenummer: 05747909.9
(22) Anmeldetag: 27.05.2005
(51) Int. Cl.: B60R 21/045, B60R 13/02

(54) **SICHERHEITSANORDNUNG FÜR DEN INNENRAUM EINES KRAFTFAHRZEUGES**
SAFETY SYSTEM FOR THE INTERIOR OF A MOTOR VEHICLE
DISPOSITIF DE SECURITE DESTINE A L'HABITACLE D'UN VEHICULE AUTOMOBILE

(30) Priorität: 03.06.2004 DE 102004027100
(43) Veröffentlichungstag der Anmeldung: 28.02.2007
(73) Patentinhaber: GM Global Technology Operations, Inc., Detroit, MI 48265-3000 (US); Johnson Controls Interiors GmbH & Co. KG, 47929 Grefrath (DE)
(72) Erfinder: DRASCHER, Michael, 63165 Mühlheim (DE); LANGMANN, Holger, 65199 Wiesbaden (DE)
(74) Vertreter: Strauss, Peter
(86) Internationale Anmeldenummer: PCT/EP2005/005696
(87) Internationale Veröffentlichungsnummer: WO 2005/118349

(56) Entgegenhaltungen:
- DE-A1- 3 908 106
- FR-A- 2 862 267
- US-A- 3 216 166
- US-A- 5 707 100
- US-A- 5 882 037
- US-B1- 6 308 488

## Beschreibung

Die vorliegende Erfindung betrifft eine Sicherheitsanordnung für den Innenraum eines Kraftfahrzeuges mit einem Armaturenbrett und einem Dämpfungskissen zum.Absorbieren der bei einem Aufprall eines Körperteiles der Insassen auftretenden Energie. Ferner betrifft die vorliegende Erfindung ein Dämpfungskissen zur Verwendung in einer solchen Sicherheitsanordnung.

Bei Unfällen mit Kraftfahrzeugen kommt es häufig dazu, dass die Fahrzeuginsassen auf Grund von Trägheitskräften gegen im Innenraum des Fahrzeugs befindliche Bestandteile desselben geschleudert werden, wie beispielsweise das Armaturenbrett, was zu ernsthaften Verletzungen führen kann. Um dieses Verletzungsrisiko zu minimieren, werden Maßnahmen ergriffen, die sich im Wesentlichen zwei Komplexen zuordnen lassen. Der erste Maßnahmenkomplex ist darauf ausgerichtet, das Schleudern der Fahrzeuginsassen gegen die entsprechenden Bestandteile im Fahrzeuginnenraum weitgehend zu verhindern. Hierzu zählt beispielsweise der klassische Fahrzeuggurt. Der zweite Maßnahmenkomplex, in den auch die vorliegende Erfindung fällt, ist darauf gerichtet, die Kräfte, die bei einem Aufprall der Fahrzeuginsassen an dem entsprechenden Bestandteil auftreten, möglichst gering zu halten bzw. abzuschwächen, um so die Verletzungsgefahr zu verringern.

So beschreibt beispielsweise die DE 101 13 508 A1 eine energieabsorbierende Vorrichtung, die im Fuß- bzw. Knieraum des Kraftfahrzeuges angeordnet ist und die Energie absorbieren soll, die während eines Fahrzeugaufpralls auftritt, wenn die auf dem Fahrzeugsitz sitzende Person nach vorne geschleudert wird. Die bekannte Sicherheitsanordnung umfasst ein Armaturenbrett, an dem eine Vorrichtung zum Halten eines Kniekissens angeordnet ist, wobei das Kniekissen dem Knieraum zugewandt ist. Die Vorrichtung zum Halten des Kniekissens wird von zwei Befestigungsteilen aus Metallblech gebildet, die in bestimmten Bereichen gestaucht werden können, so dass die Energie beim Auftreffen der Knie auf dem Kniekissen in Verformungsenergie umgewandelt werden kann und der Aufprall gedämpft ist. Die bekannte Sicherheitsanordnung weist jedoch verschiedene Nachteile auf. So ragen die das Kniekissen tragenden Befestigungsteile weit in den Knieraum, so dass die Beinfreiheit der Fahrzeuginsassen und somit der Fahrkomfort durch das Kniekissen eingeschränkt ist. Darüber hinaus sind die das Kniekissen tragenden Befestigungsteile sehr komplex, was deren Herstellung aufwendig und teuer macht. Des Weiteren ist nachteilig, dass das Kniekissen nicht an allen Stellen auf die gleiche Art abgestützt wird, da lediglich zwei Befestigungsteile vorgesehen sind, die die Seiten des Kniekissens abstützen. Sollten die Knie der Fahrzeuginsassen schräg auf das Kniekissen auftreffen, so besteht die Gefahr, dass die Befestigungsteile seitlich wegknicken, so dass die Dämpfungswirkung weitgehend verloren geht.

Eine ähnliche Sicherheitsanordnung ist aus der DE 39 05 950 C2 bekannt. Auch diese Sicherheitsanordnung betrifft ein Knie-Rückhalteelement. Das bekannte Knie-Rückhalteelement erstreckt sich quer zur Fahrtrichtung durch den Knieraum des Kraftfahrzeuges und besteht im wesentlichen aus einem Hohlprofilträger, der am Fahrzeugaufbau seitlich gehalten ist, und einem darauf angeordneten Deformationskörper, der den Knien der Fahrzeuginsassen zugewandt ist. Der Deformationskörper wird von einer dünnwandigen Blechschale und einer darauf angeordneten Komfortschaumschicht gebildet, wobei sich sowohl der Blechkörper als auch die Komfortschaumschicht über die gesamte Breite des Knieraumes erstrecken. Indem sich die bekannte Sicherheitsanordnung über die gesamte Breite des Knieraumes erstreckt und jeweils an den Seiten des Fahrzeugaufbaus, wie beispielsweise der A-Säule, befestigt ist, kann diese selbst dann eine einwandfreie Funktion gewährleisten, wenn die Knie der Fahrzeuginsassen schräg auf den Deformationskörper auftreffen, da ein Wegknicken wie bei der aus der DE 101 13 508 A1 bekannten Anordnung nicht auftreten kann. Dennoch hat auch diese Sicherheitsanordnung die Nachteile, dass die Bewegungsfreiheit der Beine der Fahrzeuginsassen nachhaltig eingeschränkt und die Herstellung auf Grund der Komplexität der Anordnung aufwendig und teuer ist.

Eine weitere Sicherheitsanordnung wird in der DE 23 47 908 A1 vorgeschlagen, allerdings soll die bekannte Anordnung vornehmlich den Kopf- und Brustbereich der Fahrzeuginsassen bei einem Aufprall schützen. So offenbart die genannte Druckschrift einen Deformator, der noch vor dem Lenkrad angeordnet und über eine vorstehende Halterung an der Lenksäule oder dem Armaturenbrett angeordnet ist. Wie bei dem zuvor genannten Stand der Technik bestehen hier große Nachteile. So ist die Bewegungsfreiheit der Fahrzeuginsassen und somit der Fahrkomfort durch die weit vorstehenden Deformatoren start eingeschränkt. Außerdem werden komplizierte Halterungen für die Deformatoren vorgeschlagen, deren Komplexität einen hohen Fertigungsaufwand bedingt.

Um die Bewegungsfreiheit der Fahrzeuginsassen zu gewährleisten und somit den Fahrkomfort zu erhöhen, ist es aus der Praxis weiterhin bekannt, an dem Armaturenbrett selbst so genannte Paddingmaßnahmen vorzunehmen. Dies bedeutet, dass heutzutage Armaturenbretter angeboten werden, in die Schaumstoffpads integriert sind. Auf diese Weise ist gewährleistet, dass keinerlei Deformationskörper, Kniekissen oder Dämpfungskissen in den Fahrzeuginnenraum hervorstehen, was den Fahrkomfort erhöht. Jedoch wird dieser Vorteil lediglich unter Inkaufnahme anderer Nachteile erzielt. Zum einen erweist sich die Herstellung von Armaturenbrettern mit innenliegenden Schaumstoffpads als aufwendig, so dass derartige Armaturenbretter hohe Herstellungskosten verursachen. Zum anderen bedingen die innenliegenden, in die Armaturenbretter integrierten Schaumstoffpfads, die eine Dicke von mindestens 10 mm aufweisen, dass der von dem Armaturenbrett umschlossene Raum verkleinert ist, der aber für weitere funktionelle Bauteile des Kraftfahrzeuges, wie beispielsweise Anzeigegeräte, dringend benötigt wird.

Um den vorstehend genannten Nachteil zu überwinden, schlägt die DE 1891785 U1 ein rahmenähnliches Sicherheitspolster für das Instrumentenbrett eines Kraftfahrzeuges vor. Zur Befestigung des Sicherheitspolsters an dem Armaturenbrett sind sowohl lange Haken, die in die seitlichen Luftaustrittskanäle in der Nähe der Windschutzscheibe passen, als auch Schrauben vorgesehen, mittels derer das Sicherheitspolster an dem Instrumentenbrett festgeschraubt ist. Das bekannte Sicherheitspolster hat den Nachteil, dass es nur schwer von dem Instrumentenbrett gelöst werden kann, falls es beschädigt ist oder im Sinne einer individuelleren Gestaltung des Fahrzeuginnenraumes durch ein anderes Sicherheitspolster ausgetauscht werden soll. So schlägt die DE 1895785 U1 darüber hinaus vor, ferner eine Klebeschicht an der dem Instrumentenbrett zugewandten Seite des Sicherheitspolsters vorzusehen, so dass ein Austausch oder Wechsel überhaupt nicht mehr möglich ist.

Demgegenüber schlägt die DE 1766400 U1 eine Schutzvorrichtung für den Beifahrer vor, die eine lösbar an dem Armaturenbrett anzuordnende Polsterschicht umfasst. Um die Lösbarkeit der Polsterschicht zu gewährleisten, sind Befestigungsorgane an der Polsterschicht vorgesehen, die an entsprechenden Befestigungsorganen an dem Armaturenbrett lösbar befestigt werden können. So sind beispielsweise an der Polsterschicht Klemmstifte, die in entsprechende Bohrungen in dem Armaturenbrett eingesetzt werden können, oder Befestigungsschlaufen vorgesehen, die an hervorstehenden Stiften, die an dem Armaturenbrett vorgesehen sind, eingehängt werden können. Trotz der vereinfachten Austauschbarkeit des bekannten Polsterschicht, gestaltet sich auch hier der Austausch der Polsterschicht noch immer schwierig, außerdem ist die sichere Befestigung des Sicherheitspolsters an dem Armaturenbrett nicht in ausreichendem Maße gewährleistet. Darüber hinaus ist die Verletzungsgefahr bei dem bekannten Sicherheitspolster erhöht.

Die US 5, 882, 037 beschreibt einen weiteren Knieprotektor, der an dem Armaturenbrett eines Kraftfahrzeuges angeordnet ist, lässt jedoch offen, wie dieser an dem Armaturenbrett befestigt ist.

Die US 6,308,488 B1 offenbart eine Befestigungsstruktur gemäß dem Oberbegriff des Anspruchs 1, bei der ein plattenförmiges Teil zu dekorativen Zwecken an einem Innenverkleidungsteil der Tür eines Kraftfahrzeuges angeordnet ist. Um eine Befestigung zu bewirken, sind an der dem Innenverkleidungsteil zugewandten Seite des plattenförmigen Teiles Haken vorgesehen, die in Aussparungen in dem Innenverkleidungsteil der Tür einbringbar sind, wobei der Rand der Aussparungen durch seitliches Verschieben des plattenförmigen Teiles von den Haken hintergriffen wird. Die endgültige Festlegung des plattenförmigen Teiles erfolgt mittels Schrauben. Auf der dem Innenverkleidungsteil abgewandten Seite ist ferner eine Polsterung vorgesehen.

Es ist eine Aufgabe der Erfindung, eine Sicherheitsanordnung für den Innenraum eines Kraftfahrzeuges mit einem Armaturenbrett und einem Dämpfungskissen zu schaffen, deren Dämpfungskissen einerseits einfach und schnell anbringbar bzw. austauschbar ist und andererseits in einer die Sicherheit des Fahrzeuginsassen gewährleistenden Weise sicher an dem Armaturenbrett befestigt ist, wobei eine weitgehend gleichmäßige Dämpfungseigenschaft des Dämpfungskissens in allen Richtungen und in allen Bereichen des Dämpfungskissens erzielt werden soll. Des Weiteren liegt der Erfindung die Aufgabe zu Grunde, ein Dämpfungskissen zu schaffen, mit welchem die vorstehend genannten Vorteile erzielt werden können.

Diese Aufgabe wird durch die in den Patentansprüchen 1 bzw. 11 angegebenen Merkmale gelöst. Vorteilhafte Ausführungsformen der Erfindung sind Gegenstand der Unteransprüche.

Die erfindungsgemäße Sicherheitsanordnung für den Innenraum eines Kraftfahrzeuges weist ein Armaturenbrett und ein Dämpfungskissen auf. Unter einem Armaturenbrett kann beispielsweise das komplette Armaturenbrett, das sich über die gesamte Fahrzeugbreite erstreckt, als auch ein Teil des Armaturenbrettes verstanden werden, sofern das komplette Armaturenbrett mehrstückig ausgebildet ist. Das Dämpfungskissen dient dem Absorbieren der bei einem Aufprall eines Körperteiles der Fahrzeuginsassen auftretenden Energie. Das Dämpfungskissen ist unmittelbar und lösbar an der Oberfläche des Armaturenbrettes angeordnet, die dem Innenraum des Kraftfahrzeuges zugewandt ist. Unter einer unmittelbaren Anordnung ist hierbei zu verstehen, dass keine vorstehenden Befestigungsteile, Halterungen o. ä. vorgesehen sind, die das Dämpfungskissen in einer den Fahrkomfort einschränkenden Weise in den Fahrzeuginnenraum hervorstehen lassen. Das Dämpfungskissen kann von einer ersten Position, in der das Dämpfungskissen an dem Armaturenbrett befestigt ist, in eine zweite Position verschoben werden, in der das Dämpfungskissen von dem Armaturenbrett abgenommen werden kann. Dies kann beispielsweise dadurch erzielt werden, dass ein Bajonettverschluss vorgesehen ist, wobei das Dämpfungskissen sowohl durch Rotation als auch durch Translation in die beiden Positionen gebracht werden kann. Es versteht sich, dass ein neues Dämpfungskissen in umgekehrter Reihenfolge wieder an dem Armaturenbrett befestigt werden kann.

Indem das Dämpfungskissen unmittelbar auf der Oberfläche des Armaturenbrettes angeordnet ist, ist eine ausreichende Bewegungsfreiheit für die Fahrzeuginsassen gewährleistet. Darüber hinaus wird der von dem Armaturenbrett eingeschlossene Raum nicht durch integrierte Schaumstoffpads verkleinert. Des Weiteren ist die erfindungsgemäße Anordnung einfach und kostengünstig herzustellen, da das Dämpfungskissen einfach auf einem herkömmlichen oder leicht modifizierten Armaturenbrett angebracht werden kann. So kann die Anbringung des Dämpfungskissens auch noch erfolgen, nachdem das Armaturenbrett bereits in das Kraftfahrzeug eingebaut wurde. Mit der lösbaren Anordnung sind zwei wesentliche Vorteile verbunden. Zum einen kann ein beschädigtes Dämpfungskissen leicht ausgetauscht werden. Auch kann das Dämpfungskissen einfach gegen andere Dämpfungskissen ausgetauscht werden, die beispielsweise eine andere Dimensionierung aufweisen, so dass die Anordnung an die fahrerspezifischen Verhältnisse angepasst werden kann. Zum anderen kann der Kraftfahrzeugbesitzer standardmäßige Dämpfungskissen durch Dämpfungskissen mit anderen Mustern oder Farben austauschen, um den Innenraum des Kraftfahrzeuges individuell zu gestalten. Die Verschiebbarkeit von der ersten Position, in der das Dämpfungskissen an dem Armaturenbrett befestigt ist, in die zweite Position, in der das Dämpfungskissen von dem Armaturenbrett abgenommen werden kann, gewährleistet ein besonders einfaches und somit schnelles Austauschen des Dämpfungskissens.

Das Dämpfungskissen ist flächig an der Oberfläche des Armaturenbrettes abgestützt, die dem Innenraum des Kraftfahrzeuges zugewandt ist. Auf diese Weise wird eine weitgehend gleichmäßige Dämpfungseigenschaft des Dämpfungskissens in allen Richtungen und in allen Bereichen des Dämpfungskissens erzielt, da sich dieses über die gesamte dem Armaturenbrett zugewandte Seite an dem Armaturenbrett abstützen kann.

In einer bevorzugten Ausführungsform der erfindungsgemäßen Sicherheitsanordnung ist das Dämpfungskissen an der dem Knieraum des Kraftfahrzeuges zugewandten Oberfläche des Armaturenbrettes angeordnet. Diese bevorzugte Ausführungsform soll sicherstellen, dass die Kniekräfte, die durch Vorschnellen der Knie der Fahrzeuginsassen bei einem Unfall, durch das Dämpfungskissen abgeschwächt und Knieverletzungen verhindert werden.

Gemäß einer weiteren vorteilhaften Ausführungsform der Erfindung besteht das Dämpfungskissen zumindest teilweise aus einem elastischen Material.

Da an die dem Armaturenbrett zugewandte Seite und die dem Fahrzeuginnenraum zugewandte Seite des Dämpfungskissens teilweise unterschiedliche Anforderungen gestellt werden, nämlich eine gute Befestigung einerseits und ein sanftes Abfangen des Körperteils des Fahrzeuginsassen andererseits, weist das Dämpfungskissen in einer besonders bevorzugten Ausführungsform der Erfindung mindestens zwei Lagen aus Materialien unterschiedlicher Elastizität auf. Auf diese Weise sind die verschiedenen Seiten des Dämpfungskissens optimal an die jeweiligen Anforderungen angepasst, wie dies insbesondere bei der nachstehend beschriebenen Ausführungsform deutlich wird.

In einer besonders bevorzugten Ausführungsform der Sicherheitsanordnung gemäß der Erfindung weist das Dämpfungskissen eine dem Armaturenbrett zugewandte erste Lage und eine dem Armaturenbrett abgewandte zweite Lage auf, wobei die erste Lage weniger elastisch als die zweite Lage ist. Indem die dem Armaturenbrett zugewandte Lage des Dämpfungskissens weniger elastisch ausgebildet ist, kann dessen Aufgabe, nämlich auch eine sichere Befestigung an dem Armaturenbrett zu gewährleisten, besser erfüllt werden. Demgegenüber kann die elastischere zweite Lage die Kniekräfte sanfter auffangen.

Vorzugsweise besteht die erste Lage aus Hartplastik und die zweite Lage aus Gummi, um die vorstehend genannten Vorteile zu erzielen.

In einer weiteren bevorzugten Ausführungsform der erfindungsgemäßen Sicherheitsanordnung sind Befestigungsmittel zum Befestigen des Dämpfungskissens vorgesehen. Die Befestigungsmittel umfassen einerseits eine Aussparung und andererseits einen in der zweiten Position des Dämpfungskissens in die Aussparung einführbaren vorspringenden Ansatz. Der vorspringende Ansatz weist eine Schulter auf, die den Rand der Aussparung in der ersten Position des Dämpfungskissens hintergreift. Der vorspringende Ansatz kann entweder an dem Dämpfungskissen oder an dem Armaturenbrett angeordnet sein, wobei die zugehörige Aussparung dann jeweils an dem gegenüberliegenden Teil der Anordnung vorgesehen ist.

Um ein besonders sicheres Hintergreifen des Randes der Aussparung durch die Schulter zu gewährleisten, ist der vorspringende Ansatz in einer bevorzugten Ausführungsform der Erfindung pilzförmig ausgebildet, wobei die Aussparung einen ersten Abschnitt, in den der vorspringende Ansatz eingeführt werden kann, und einen daran anschließenden schmaleren zweiten Abschnitt aufweist. Auf Grund der Pilzform ist eine umlaufende Schulter vorhanden, die den Rand des schmalen Abschnittes unabhängig von der Drehstellung des Dämpfungskissens in der zweiten Position sicher hintergreift.

Um eine besonders hohe Festigkeit des vorspringenden Ansatzes und somit ein sicheres Befestigen des Dämpfungskissens an dem Armaturenbrett zu gewährleisten, ist der vorspringende Ansatz einstückig mit dem Dämpfungskissen oder dem Armaturenbrett ausgebildet. Durch die einstückige Ausbildung des vorspringenden Ansatzes mit dem entsprechenden Bestandteil der Sicherheitsanordnung wird ferner ein vereinfachter Zusammenbau der erfindungsgemäßen Anordnung erzielt, da auf zusätzliche Bauteile verzichtet werden kann.

Da es möglich ist, die Dämpfungskissen - gegebenenfalls aus ästhetischen Gründen - gänzlich abzunehmen, ist der vorspringende Ansatz in einer weiteren bevorzugten Ausführungsform der Erfindung an dem Dämpfungskissen vorgesehen. Auf diese Weise ist gewährleistet, dass bei abgenommenen Dämpfungskissen keine vorstehenden Teile an dem Armaturenbrett verbleiben, die ein Verletzungsrisiko in sich bergen. Aussparungen sind hingegen unproblematisch und können leicht überklebt oder anderweitig verschlossen werden.

Das erfindungsgemäße Dämpfungskissen findet Verwendung in einer erfindungsgemäßen Sicherheitsanordnung und weist eine Anlagefläche auf, die unmittelbar an eine dem Innenraum eines Kraftfahrzeuges zugewandte Oberfläche eines Armaturenbrettes derart angelegt werden kann, dass die gesamte dem Armaturenbrett zugewandte Seite flächig an der Oberfläche des Armaturenbrettes abgestützt ist. Das Dämpfungskissen weist ferner kissenseitige Befestigungsmittel auf, die derart mit armaturenbrettseitigen Befestigungsmitteln zusammenwirken können, dass das Dämpfungskissen von einer ersten Position, in der das Dämpfungskissen unmittelbar an der Oberfläche des Armaturenbrettes befestigt ist, in eine zweite Position verschoben werden kann, in der das Dämpfungskissen von dem Armaturenbrett abgenommen werden kann.

Weitere Ausführungsformen des erfindungsgemäßen Dämpfungskissens sowie deren Vorteile ergeben sich aus der obigen Beschreibung betreffend die erfindungsgemäße Sicherheitsanordnung mit einem Dämpfungskissen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden an Hand eines Ausführungsbeispieles unter Bezugnahme auf die zugehörigen Zeichnungen näher erläutert. Es zeigt:
- Fig. 1: eine schematische Darstellung der erfindungsgemäßen Sicherheitsanordnung in Seitenansicht,
- Fig. 2: eine Vorderansicht der erfindungsgemäßen Sicherheitsanordnung von Fig. 1,
- Fig. 3: eine Seitenansicht des an dem Armaturenbrett befestigten Dämpfungskissens in geschnittener Darstellung und
- Fig. 4: eine Draufsicht auf die Befestigungsmittel in Richtung des Pfeils A von Fig. 3.

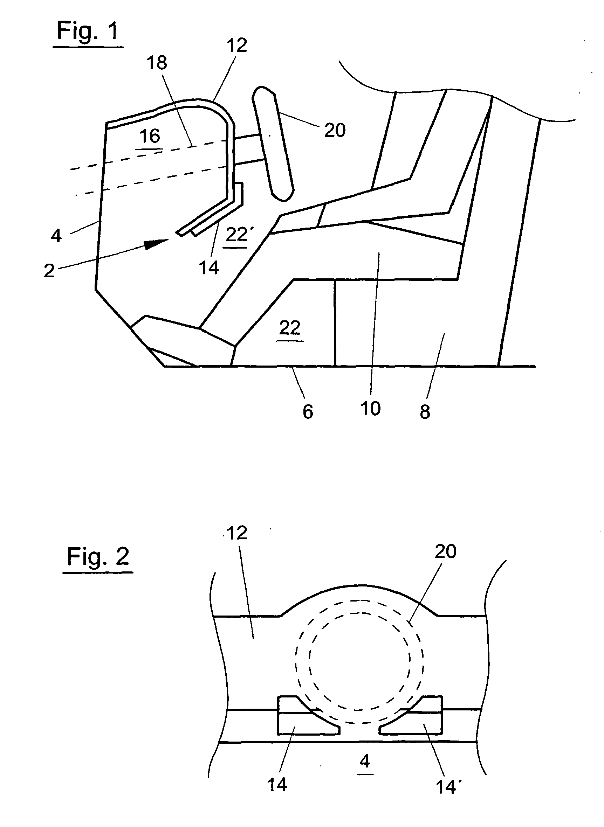

Fig. 1 zeigt eine schematische Seitenansicht des Fahrerbereiches eines Kraftfahrzeuges mit der erfindungsgemäßen Sicherheitsanordnung. Schematisch angedeutet ist die Motorraumwand 4, die nach unten in den Fahrzeugboden 6 übergeht. Auf dem Fahrzeugboden 6 ist ein Fahrzeugsitz 8 vorgesehen, auf dem ein Fahrzeuginsasse, in diesem Fall der Fahrer 10, sitzt. Zwischen der Motorraumwand 4 und dem Fahrzeugsitz 8 bzw. dem Fahrer 10 ist die Sicherheitsanordnung 2 angeordnet.

Die Sicherheitsanordnung 2 umfasst ein Armaturenbrett 12 und zwei Dämpfungskissen 14, 14', wobei in Fig. 1 lediglich das Dämpfungskissen 14 zu sehen ist. Das Armaturenbrett 12 erstreckt sich ausgehend von der Motorraumwand 4 in Richtung des Fahrzeugsitzes 8 und schließt einen Raum 16 ein, in dem beispielsweise Teile der Elektronik für die Anzeigen untergebracht sein können, wobei auf deren Darstellung aus Übersichtlichkeitsgründen verzichtet wurde. Durch den Raum 16 erstreckt sich ferner eine gestrichelt dargestellte Lenksäule 18, die aus der dem Fahrer 10 zugewandten Seite des Armaturenbrettes 12 austritt, wo ein Lenkrad 20 zur Steuerung des Kraftfahrzeuges angeordnet ist. Zwischen der Motorraumwand 4 und dem Fahrzeugsitz 8 und zwischen dem Armaturenbrett 12 und dem Fahrzeugboden 6 ist der Fußraum 22 ausgebildet, wobei sich der Fußraum in Bodennähe befindet. Oberhalb des Fußraumes 22 ist der Knieraum 22' ausgebildet, in dem sich die Knie des Fahrers 10 bewegen.

Wie aus Fig. 1 ersichtlich, sind die Dämpfungskissen 14, 14' unmittelbar an dem Armaturenbrett 12 angeordnet, und zwar an der dem Innenraum des Kraftfahrzeuges zugewandten Oberfläche. Die Dämpfungskissen 14, 14' sind dabei flächig an dem Armaturenbrett 12 abgestützt. Dies schließt ein, dass die Dämpfungskissen 14, 14' auch etwaigen Rundungen oder Kanten in dem Armaturenbrett 12 folgen, wie dies in Fig. 1 veranschaulicht ist. Bei der dargestellten Ausführungsform sollen die Knie des Fahrers 10 vor Verletzungen geschützt sein, so dass die Dämpfungskissen 14, 14' an der dem Knieraum 22' zugewandten Oberfläche des Armaturenbrettes 12 angeordnet sind. Wie aus Fig. 2 ersichtlich, die eine Draufsicht auf die Sicherheitsanordnung 2 aus der Sicht des Fahrers 10 zeigt, ist das Dämpfungskissen 14 zu der linken Seite des Lenkrades 20 und das Dämpfungskissen 14' zur rechten Seite des Lenkrades 20 angeordnet. Auf diese Weise ist für jedes Knie des Fahrers 10 ein eigenes Dämpfungskissen 14, 14' vorgesehen, allerdings ist es auch möglich, noch mehr Dämpfungskissen oder gar nur ein großes zusammenhängendes Dämpfungskissen vorzusehen.

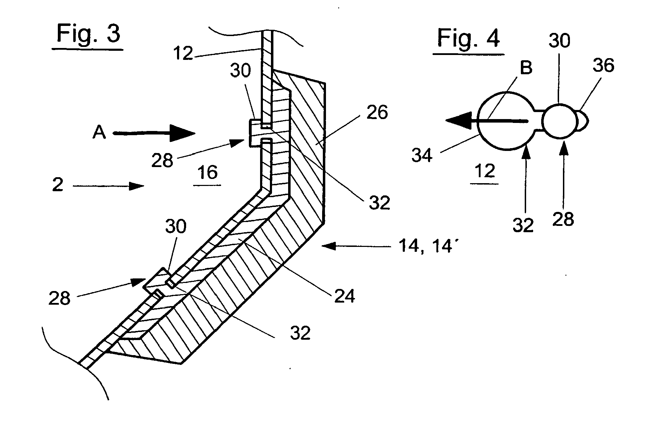

Fig. 3 zeigt eine geschnittene Darstellung des an dem Armaturenbrett 12 befestigten Dämpfungskissens 14, 14'. Das Dämpfungskissen 14, 14' setzt sich aus zwei Lagen 24 und 26 zusammen. Die erste Lage 24 ist dem Armaturenbrett 12 zugewandt, während die auf der ersten Lage 24 angeordnete zweite Lage 26 dem Armaturenbrett 12 abgewandt ist, so dass letztere dem Knieraum 22 zugewandt ist. Die erste Lage 24 ist dabei weniger elastisch ausgebildet als die zweite Lage 26, um eine sichere und einfache Befestigung des Dämpfungskissens 14, 14' an dem Armaturenbrett 12 zu gewährleisten, wobei auf die Befestigung später näher eingegangen werden soll. Im vorliegenden Beispiel ist die erste Lage 24 aus Hartplastik und die zweite Lage 26 aus Gummi hergestellt. Wie aus Fig. 3 ersichtlich, sollte die erste Lage 24 vorteilhafterweise auch randseitig von der zweiten Lage 26 verdeckt sein, so dass ein Anschlagen der Knie im Falle eines Crashs stets an der zweiten, elastischeren Lage 26 erfolgt.

Um das Dämpfungskissen 14, 14'an dem Armaturenbrett 12 zu befestigen, sind Befestigungsmittel vorgesehen, die sich in dämpfungskissenseitige Befestigungsmittel und armaturenbrettseitige Befestigungsmittel unterteilen lassen. Die dämpfungskissenseitigen Befestigungsmittel umfassen einen oder mehrere vorspringende Ansätze 28, die pilzförmig ausgebildet sind. Die vorspringenden Ansätze 28 erstrecken sich dabei von der ersten Lage 24 des Dämpfungskissens 14, 14' in Richtung des Armaturenbrettes 12. Auf Grund der pilzförmigen Ausgestaltung des vorspringenden Ansatzes 28 weist dieser eine umlaufende Schulter 30 auf. Die armaturenbrettseitigen Befestigungsmittel umfassen Aussparungen 32, wobei die Aussparungen 32 in der Art eines Schlüsselloches ausgebildet sind, d.h. diese umfassen einen ersten Abschnitt 34 in den der vorspringende Ansatz 28 eingeführt werden kann, und einen zweiten Abschnitt 36. Der zweite Abschnitt 36 schließt sich seitlich an den ersten Abschnitt 34 an und ist schmaler als der erste Abschnitt 34, wie dies insbesondere in Fig. 4 zu erkennen ist.

In der dargestellten ersten Position des Dämpfungskissens 14, 14' ist dieses an dem Armaturenbrett 12 befestigt, es ist jedoch lösbar an dem Armaturenbrett 12 angeordnet. In der ersten Position hintergreift die Schulter 30 des pilzförmigen vorspringenden Ansatzes 28 den Rand des länglichen Abschnittes 36 der Aussparung 32, so dass das Dämpfungskissen 14, 14' nicht von dem Armaturenbrett 12 abgenommen werden kann. Um das Dämpfungskissen 14, 14' von dem Armaturenbrett 12 zu lösen, muss dieses lediglich seitlich in eine zweite Position verschoben werden, so dass der vorspringende Ansatz 28 aus seiner den Rand des länglichen Abschnittes 36 hintergreifenden Stellung in den ersten Abschnitt 34 der Aussparung 32 gelangt, wie dies an Hand des Pfeils B in Fig. 4 dargestellt ist. Durch den ersten Abschnitt 34 der Aussparung 32 kann der vorspringende Ansatz 28 dann ausgeführt werden. In dieser zweiten Position ist das Dämpfungskissens 14, 14' also einfach zu lösen, indem es nach vorne abgenommen wird.

In umgekehrter Reihenfolge kann dann ein neues Dämpfungskissen angebracht werden, d.h. der vorspringende Ansatz 28 wird in der zweiten Position des Dämpfungskissens 14, 14' in den ersten Abschnitt 34 der Aussparung 32 eingeführt, um das Dämpfungskissen 14, 14' anschließend seitlich zu verschieben, so dass die Schulter 30 des vorspringenden Ansatzes 28 den Rand des länglichen zweiten Abschnittes 36 der Aussparung 32 hintergreift. Die dargestellte Ausführungsform, die eine Art Bajonettverschluss aufweist, gewährleistet somit ein einfaches und schnelles Auswechseln der Dämpfungskissen 14, 14'.

Um eine sichere Befestigung und einen einfachen Zusammenbau der Sicherheitsanordnung zu gewährleisten, ist der vorspringenden Ansatz 28 einstückig mit dem Dämpfungskissen 14, 14' ausgebildet, im vorliegenden Falle einstückig mit der ersten Lage 24 des Dämpfungskissens 14, 14'. Zwar kann der vorspringende Ansatz 28 auch an dem Armaturenbrett 12 vorgesehen sein, während die Aussparung 32 an dem Dämpfungskissen ausgebildet sein kann, jedoch ist die dargestellte Ausführungsform insofern vorteilhafter, als dass nach dem Abnehmen der Dämpfungskissen 14, 14' keine vorstehenden Ansätze an dem Armaturenbrett 12 verbleiben, die eine erhöhte Verletzungsgefahr für die Fahrzeuginsassen bedeuten würden.

### Bezugszeichenliste

| | |
|---|---|
| 2 | Sicherheitsanordnung |
| 4 | Motorraumwand |
| 6 | Fahrzeugboden |
| 8 | Fahrzeugsitz |
| 10 | Fahrer |
| 12 | Armaturenbrett |
| 14 | Linkes Dämpfungskissen |
| 14' | Rechtes Dämpfungskissen |
| 16 | Raum |
| 18 | Lenksäule |
| 20 | Lenkrad |
| 22 | Fußraum |
| 22' | Knieraum |
| 24 | Erste Lage des Dämpfungskissens |
| 26 | Zweite Lage des Dämpfungskissens |
| 28 | Vorspringender Ansatz |
| 30 | Schulter des vorspringenden Ansatzes |
| 32 | Aussparung |
| 34 | Erster Abschnitt der Aussparung |
| 36 | Zweiter Abschnitt der Aussparung |

## Patentansprüche

1. Sicherheitsanordnung für den Innenraum eines Kraftfahrzeuges, aufweisend ein Armaturenbrett (12) und ein Dämpfungskissen (14, 14') zum Absorbieren der bei einem Aufprall eines Körperteiles (24) der Insassen (10) auftretenden Energie, wobei das Dämpfungskissen (14, 14') unmittelbar und lösbar an einer dem Innenraum des Kraftfahrzeuges zugewandten oberfläche angeordnet und von einer ersten Position, in der das (14, 14') an der Oberfläche befestigt ist, in eine zweite Position verschiebbar ist, in der das Dämpfungskissen (14, 14') von der Oberfläche abnehmbar ist, **dadurch gekennzeichet,** dass das Dämpfungskissen (14, 14') an der Oberfläche des Armaturenbrettes (12) angeordnet und über die gesamte dem Armaturenbrett (12) zugewandte Seite flächig an der dem Innenraum des Kraftfahrzeuges zugewandten Oberfläche des Armaturenbrettes (12) abgestützt ist.

2. Sicherheitsanordnung nach Anspruch 1, **dadurch gekennzeichnet, dass** das Dämpfungskissen (14, 14') mindestens zwei Lagen (24, 26) aus Materialien unterschiedlicher Elastizität umfasst, wobei die erste Lage (24) dem Armaturenbrett (12) zugewandt ist und auch randseitig von der zweiten Lage (26) verdeckt ist, die dem Armaturenbrett (12) abgewandt ist.

3. Sicherheitsanordnung nach Anspruch 1 oder 2, **dadurch gekennzeichnet, dass** das Dämpfungskissen (14, 14') an der dem Knieraum (22') des Kraftfahrzeuges zugewandten Oberfläche des Armaturenbrettes (12) derart angeordnet ist, dass es Rundungen oder Kanten in dem Armaturenbrett folgt.

4. Sicherheitsanordnung nach einem der vorhergehenden Ansprüche, **dadurch gekennzeichnet, dass** das Dämpfungskissen (14, 14') zumindest teilweise aus einem elastischen Material besteht.

5. Sicherheitsanordnung nach Anspruch 1, **dadurch gekennzeichnet, dass** die erste Lage (24) weniger elastisch als die zweite Lage (26) ist.

6. Sicherheitsanordnung nach Anspruch 5, **dadurch gekennzeichnet, dass** die erste Lage aus Hartplastik und die zweite Lage aus Gummi besteht.

7. Sicherheitsanordnung nach einem der Ansprüche 1 bis 6, **dadurch gekennzeichnet, dass** Befestigungsmittel zum Befestigen des Dämpfungskissens (14, 14') vorgesehen sind, die einerseits eine Aussparung (32) und andererseits einen in der zweiten Position des Dämpfungskissens (14, 14') in die Aussparung (32) einführbaren vorspringenden Ansatz (28) umfassen, wobei der vorspringende Ansatz (28) eine Schulter (30) aufweist, die den Rand der Aussparung (32) in der ersten Position des Dämpfungskissens (14, 14') hintergreift.

8. Sicherheitsanordnung nach Anspruch 7, **dadurch gekennzeichnet, dass** der vorspringende Ansatz (28) pilzförmig ist und die Aussparung (32) einen ersten Abschnitt (34), in den der vorspringende Ansatz (28) einführbar ist, und einen daran anschließenden schmaleren zweiten Abschnitt (36) aufweist.

9. Sicherheitsanordnung nach einem der Ansprüche 7 oder 8, **dadurch gekennzeichnet, dass** der vorspringende Ansatz (28) einstückig mit dem Dämpfungskissen (14, 14') oder dem Armaturenbrett (12) ausgebildet ist.

10. Sicherheitsanordnung nach einem der Ansprüche 7 bis 9, **dadurch gekennzeichnet, dass** der vorspringende Ansatz (28) an dem Dämpfungskissen (14, 14') vorgesehen ist.

11. Dämpfungskissen zur Verwendung in einer Sicherheitsanordnung nach einem der Ansprüche 1 bis 10, **dadurch gekennzeichnet, dass** das Dämpfungskissen (14, 14') eine Anlagefläche aufweist, die unmittelbar an eine dem Innenraum eines Kraftfahrzeuges zugewandte Oberfläche eines Armaturenbrettes (12) derart anlegbar ist, so dass die gesamte dem Armaturenbrett zugewandte Seite flächig an der Oberfläche des Armaturenbrettes (12) abgestützt ist, wobei das Dämpfungskissen (14, 14') dämpfungskissenseitige Befestigungsmittel (28) aufweist, die derart mit armaturenbrettseitigen Befestigungsmitteln zusammenwirken können, dass das Dämpfungskissen (14, 14') von einer ersten Position, in der das Dämpfungskissen (14, 14') unmittelbar an der Oberfläche des Armaturenbrettes befestigt ist, in eine zweite Position verschiebbar ist, in der das Dämpfungskissen (14, 14') von dem Armaturenbrett abnehmbar ist.

## Claims

1. Safety arrangement for the interior of a motor vehicle, having a dashboard (12) and a damping cushion (14, 14') for absorbing the energy generated during an impact of a body part (24) of the occupants (10), wherein the damping cushion (14, 14') is arranged directly and detachably on a surface facing the interior of the motor vehicle and can be displaced from a first position, in which the damping cushion (14, 14') is fastened to the surface, into a second position, in which the damping cushion (14, 14') can be removed from the surface, **characterised in that** the damping cushion (14, 14') is arranged on the surface of the dashboard (12) and is supported in a planar manner on the surface of the dashboard (12) facing the interior of the motor vehicle by means of the entire side facing the dashboard (12).

2. Safety arrangement according to claim 1, **characterised in that** the damping cushion (14, 14') comprises at least two layers (24, 26) made of materials with different elasticity, the first layer (24) facing the dashboard (12) and also being covered at its edge by the second layer (26), which is remote from the dashboard (12).

3. Safety arrangement according to claim 1 or 2, **characterised in that** the damping cushion (14, 14') is arranged on the surface of the dashboard (12) facing the knee space (22') of the motor vehicle in such a way that it follows rounded areas or edges in the dashboard.

4. Safety arrangement according to any one of the preceding claims, **characterised in that** the damping cushion (14, 14') at least partially consists of an elastic material.

5. Safety arrangement according to claim 1, **characterised in that** the first layer (24) is less elastic than the second layer (26).

6. Safety arrangement according to claim 5, **characterised in that** the first layer consists of hard plastics material and the second layer consists of rubber.

7. Safety arrangement according to any one of claims 1 to 6, **characterised in that** fastening means are provided for fastening the damping cushion (14, 14'), which, on the one hand, comprise a recess (32) and, on the other hand, a projecting lug (28) which can be introduced into the recess (32) in the second position of the damping cushion (14, 14'), the projecting lug (28) having a shoulder (30), which engages behind the edge of the recess (32) in the first position of the damping cushion (14, 14').

8. Safety arrangement according to claim 7, **characterised in that** the projecting lug (28) is mushroom-shaped and the recess (32) has a first section (34), into which the projecting lug (28) can be introduced, and a narrower second section (36) adjacent thereto.

9. Safety arrangement according to either of claims 7 or 8, **characterised in that** the projecting lug (28) is configured in one piece with the damping cushion (14, 14') or the dashboard (12).

10. Safety arrangement according to any one of claims 7 to 9, **characterised in that** the projecting lug (28) is provided on the damping cushion (14, 14').

11. Damping cushion for use in a safety arrangement according to any one of claims 1 to 10, **characterised in that** the damping cushion (14, 14') has a contact face, which can be placed directly on a surface of a dashboard (12) facing the interior of a motor vehicle in such a way that the entire side facing the dashboard is supported in a planar manner on the surface of the dashboard (12), wherein the damping cushion (14, 14') has fastening means (28) on the damping cushion side, which can cooperate with fastening means on the dashboard side in such a way that the damping cushion (14, 14') can be displaced from a first position, in which the damping cushion (14, 14') is fastened directly to the surface of the dashboard, into a second position, in which the damping cushion (14, 14') can be removed from the dashboard.

## Revendications

1. Dispositif de sécurité pour l'habitacle d'un véhicule automobile, comportant un tableau de bord (12) et un coussin amortisseur (14, 14') destiné à absorber l'énergie générée lors d'un choc d'une partie du corps (24) d'un occupant du véhicule (10), le coussin amortisseur (14, 14') pouvant être fixé directement et de manière amovible contre une surface, orientée vers l'habitacle du véhicule automobile et pouvant être déplacé depuis une première position, dans laquelle le coussin amortisseur (14, 14') est fixé contre la surface, vers une deuxième position, dans laquelle le coussin amortisseur (14, 14') peut être retiré de la surface, **caractérisé en ce que** le coussin amortisseur (14, 14') est agencé sur la surface du tableau de bord (12) et est en appui plan avec la totalité du côté orienté vers le tableau de bord (12) contre la surface du tableau de bord (12), orientée vers l'habitacle du véhicule.

2. Dispositif de sécurité selon la revendication 1, **caractérisé en ce que** le coussin amortisseur (14, 14') comporte au moins deux couches (24, 26) réalisées dans des matériaux à élasticité différente, la première couche (24) étant orientée vers le tableau de bord (12) et étant masquée, également du côté du bord, par la deuxième couche (26) qui est détournée du tableau de bord (12).

3. Dispositif de sécurité selon la revendication 1 ou 2, **caractérisé en ce que** le coussin amortisseur (14, 14') est agencé sur la surface du tableau de bord (12), orientée vers l'espace des genoux (22') du véhicule automobile, de telle sorte qu'il suit les arrondis et les arêtes dans le tableau de bord.

4. Dispositif de sécurité selon l'une quelconque des revendications précédentes, **caractérisé en ce que** le coussin amortisseur (14, 14') est réalisé au moins en partie dans un matériau élastique.

5. Dispositif de sécurité selon la revendication 1, **caractérisé en ce que** la première couche (24) est moins élastique que la deuxième couche (26).

6. Dispositif de sécurité selon la revendication 5, **caractérisé en ce que** la première couche est réalisée en plastique dur et la deuxième couche est réalisée en caoutchouc.

7. Dispositif de sécurité selon l'une quelconque des revendications 1 à 6, **caractérisé en ce qu'**il est prévu des moyens de fixation pour fixer le coussin amortisseur (14, 14'), lesquels comportent, d'une part, un évidement (32) et, d'autre part, un téton (28) saillant qui, dans la deuxième position du coussin amortisseur (14, 14'), peut être introduit dans l'évidement (32), le téton (28) saillant comportant un épaulement (30) qui, dans la première position du coussin amortisseur (14, 14'), enserre par l'arrière le bord de l'évidement (32).

8. Dispositif de sécurité selon la revendication 7, **caractérisé en ce que** le téton (28) saillant est réalisé en forme de champignon et l'évidement (32) comporte une première partie (34), dans laquelle le téton (28) saillant peut être introduit, et une deuxième partie (36) adjacente plus étroite.

9. Dispositif de sécurité selon la revendication 7 ou 8, **caractérisé en ce que** le téton (28) saillant est réalisé d'un seul tenant avec le coussin amortisseur (14, 14') ou le tableau de bord (12).

10. Dispositif de sécurité selon l'une quelconque des revendications 7 à 9, **caractérisé en ce que** le téton (28) saillant est prévu sur le coussin amortisseur (14, 14').

11. Coussin amortisseur destiné à être utilisé dans un dispositif de sécurité selon l'une quelconque des revendications 1 à 10, **caractérisé en ce que** le coussin amortisseur (14, 14') comporte une surface d'appui, qui peut être appuyée directement contre une surface d'un tableau de bord (12), orientée vers l'habitacle d'un véhicule automobile, de telle sorte que la totalité du côté orienté vers le tableau de bord est en appui plan contre la surface du tableau de bord (12), le coussin amortisseur (14, 14') comportant des moyens de fixation (28) du côté coussin amortisseur, qui peuvent coopérer avec des moyens de fixation du côté tableau de bord, de telle sorte que le coussin amortisseur (14, 14') peut être déplacé d'une première position, dans laquelle le coussin amortisseur (14, 14') est fixé directement contre la surface du tableau de bord, vers une deuxième position, dans laquelle le coussin amortisseur (14, 14') peut être retiré du tableau de bord.
